# EUROPÄISCHE PATENTANMELDUNG

(11) **EP 1 343 246 A2**
(43) Veröffentlichungstag der Anmeldung: **10.09.2003**
(21) Anmeldenummer: 02450280.9
(22) Anmeldetag: 12.12.2002
(51) Int. Cl.: H02P 3/18

(54) **Schaltungsanordnung zur Speisung eines Elektromotors**

(30) Priorität: 07.03.2002 AT 3602002
(71) Anmelder: Innova Patent GmbH, 6960 Wolfurt (AT)
(72) Erfinder: Fuchs, Elmar, 6900 Bregenz (AT)
(74) Vertreter: Atzwanger, Richard, Dipl.-Ing. Patentanwalt

(57) **Zusammenfassung**

Schaltungsanordnung zur Speisung eines Elektromotors (5), welcher einen ortsfest angeordneten Stator und einen beweglichen, insbesondere verdrehbar gelagerten Rotor aufweist, wobei der Stator mit einer Vielzahl von insbesondere ringförmig angeordneten Elektromagneten und der Rotor mit einer Vielzahl von den Elektromangneten des Stators zugeordneten, insbesondere ringförmig angeordneten Permanentmagneten ausgebildet ist, mit einer Gleichrichterschaltung (1) zur Umwandlung der vom Speisenetz bezogenen Wechselspannung in eine Gleichspannung sowie mit einer Umrichterschaltung (3), durch welche die Gleichspannung in eine in ihrer Frequenz steuerbare Wechselspannung, welche zur Speisung des Elektromotors (5) dient, umwandelbar ist. Dabei ist zwischen der Gleichrichterschaltung (1) und der Umrichterschaltung (3) eine mindestens einen Akkumulator (21) enthaltende Speicherschaltung (2) vorgesehen (Fig.1).

## Beschreibung

Die gegenständliche Erfindung betrifft eine Schaltungsanordnung zur Speisung eines Elektromotors, welcher einen ortsfest angeordneten Stator und einen beweglichen, insbesondere einen verdrehbar gelagerten Rotor aufweist, wobei der Stator mit einer Vielzahl von insbesondere ringförmig angeordneten Elektromagneten und der Rotor mit einer Vielzahl von den Elektromagneten des Stators zugeordneten, insbesondere ringförmig angeordneten Permanentmagneten ausgebildet ist, mit einer Gleichrichterschaltung zur Umwandlung der vom Speisenetz bezogenen Wechselspannung in eine Gleichspannung und mit einer Umrichterschaltung, durch welche die Gleichspannung in eine in ihrer Frequenz steuerbare Wechselspannung, welche zur Speisung des Elektromotors dient, umwandelbar ist.

Bekannte derartige Schaltungsanordnungen bestehen aus einer Gleichrichterschaltung, durch welche die vom Speisenetz bezogene, insbesondere dreiphasige Wechselspannung in eine Gleichspannung umgewandelt wird. An die Gleichrichterschaltung ist eine Umrichterschaltung angeschlossen, durch welche eine Wechselspannung erzeugt wird, welche als Speisespannung für den Elektromotor dient, wobei die Antriebssteuerung des Elektromotors durch die Steuerung der Frequenz und der Amplitude der aus der Gleichspannung erzeugten Wechselspannung erfolgt. Zwischen der Gleichrichterschaltung und der Umrichterschaltung befindet sich ein Kondensatoren enthaltender Schaltungsteil, durch welchen die erforderliche Glättung der Gleichspannung bewirkt wird.

Durch die aus der Gleichspannung erzeugte Wechselspannung erfolgt die Speisung der am Stator befindlichen Elektromagneten, durch welche die am Rotor angeordneten Permanentmagneten angezogen bzw. abgestossen werden, wodurch der Rotor bewegt wird.

Soferne dabei die Elektromagneten in jeweils für sich wirksamen Gruppen angeordnet sind, ist die Funktion des Elektromotors auch bei einem Ausfall von einzelnen Elektromagneten gewährleistet.

Eine derartige Schaltungsanordnung entspricht jedoch insoferne nicht den an sie gestellten Anforderungen, da bei einem Ausfall der Speisespannung die für den Betrieb des Antriebsmotors erforderliche Energie sofort ausfällt, wodurch die Anlage abrupt zum Stillstand kommt. Da jedoch bei einer Vielzahl von Anlagen, z.B. Seilbahnanlagen, ein Auslaufen der Bewegung zwingend erforderlich ist, besteht das Erfordernis, eine Schwungmasse vorzusehen, durch deren kinetische Energie die Anlage langsam zum Stillstand kommt.

Der gegenständlichen Erfindung liegt somit die Aufgabe zugrunde, eine Schaltungsanordnung zur Speisung eines Antriebsmotors zu schaffen, durch welche ein Auslaufen der Bewegung auch dann gewährleistet ist, soferne keine Schwungmasse vorgesehen ist. Dies wird erfindungsgemäß dadurch erzielt, daß zwischen der Gleichrichterschaltung und der Umrichterschaltung eine mindestens einen Akkumulator enthaltende Speicherschaltung vorgesehen ist.

Vorzugsweise ist in der Speicherschaltung mindestens eine Gruppe von in Serie geschalteten Akkumulatoren vorgesehen. Dabei kann die Speicherschaltung in an sich bekannter Weise auch mindestens einen Kondensator enthalten, welcher dem mindestens einen Akkumulator parallel geschaltet ist. Nach einer weiters bevorzugten Ausführungsform ist der Stator des Elektromotors mit mehreren Gruppen von Elektromagneten ausgebildet, welchen jeweils eigene Speicherschaltungen und Umrichterschaltungen zugeordnet sind.

Der Gegenstand der Erfindung ist nachstehend anhand von in der Zeichnung dargestellten Ausführungsbeispielen näher erläutert. Es zeigen:
- Fig. 1: eine erfindungsgemäße Schaltungsanordnung sowie die
- Fig.2 und 3: die Anwendung einer erfindungsgemäßen Schaltungsanordnung bei zwei Ausführungsformen von durch diese Schaltungsanordnung gespeisten Elektromotoren, in Blockschaltbildern.

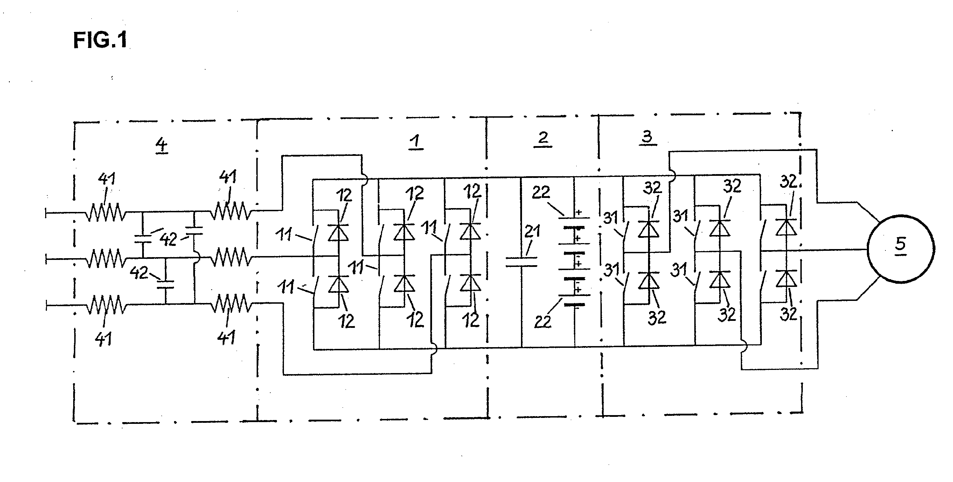

Wie dies aus Fig.1 ersichtlich ist, enthält eine erfindungsgemäße Schaltungsanordnung eine Gleichrichterschaltung 1, eine Speicherschaltung 2, eine Umrichterschaltung 3 und eine Filterschaltung 4. Die Gleichrichterschaltung 1 ist über die Drosseln 41 und Kondensatoren 42 enthaltende Filterschaltung 4 an ein dreiphasiges Speisenetz angelegt. Durch die Gleichrichterschaltung 1, welche eine Mehrzahl von elektronischen Schaltern 11 und von Ventilen 12 enthält, erfolgt eine Umwandlung der Wechselspannung in eine Gleichspannung. Die Filterschaltung 4 dient dazu, durch die Gleichrichterschaltung 1 verursachte Störungen des Speisenetzes zu verhindern.

Durch die Speicherschaltung 2, welche eine Mehrzahl von in Serie geschalteten Akkumulatoren 21 und weiters zumindest einen Kondensator 22 enthält, erfolgt eine Speicherung von Gleichspannungsenergie.

Durch die Umrichterschaltung 3, welche gleichfalls eine Mehrzahl von elektronischen Schaltern 31 und von Ventilen 32 enthält, erfolgt die Erzeugung einer Wechselspannung zur Speisung eines Antriebsmotors 5. Die Bewegungssteuerung des Antriebsmotors 5 erfolgt dadurch, daß die in der Umrichterschaltung 3 erzeugte Wechselspannung in ihrer Amplitude und in ihrer Frequenz gesteuert wird.

Soferne das Speisenetz ausfällt, erfolgt die Speisung der Umrichterschaltung 3 durch die in den Akkumulatoren 21 gespeicherte elektrische Energie. Hierdurch wird die erforderliche weitere Bewegung des Antriebsmotors 5 gewährleistet, um einen abrupten Stillstand der durch diesen angetriebenen Anlage, z.B. einer Seilbahnanlage, auszuschließen. Vielmehr wird diese mit abnehmender Geschwindigkeit zum Stillstand gebracht.

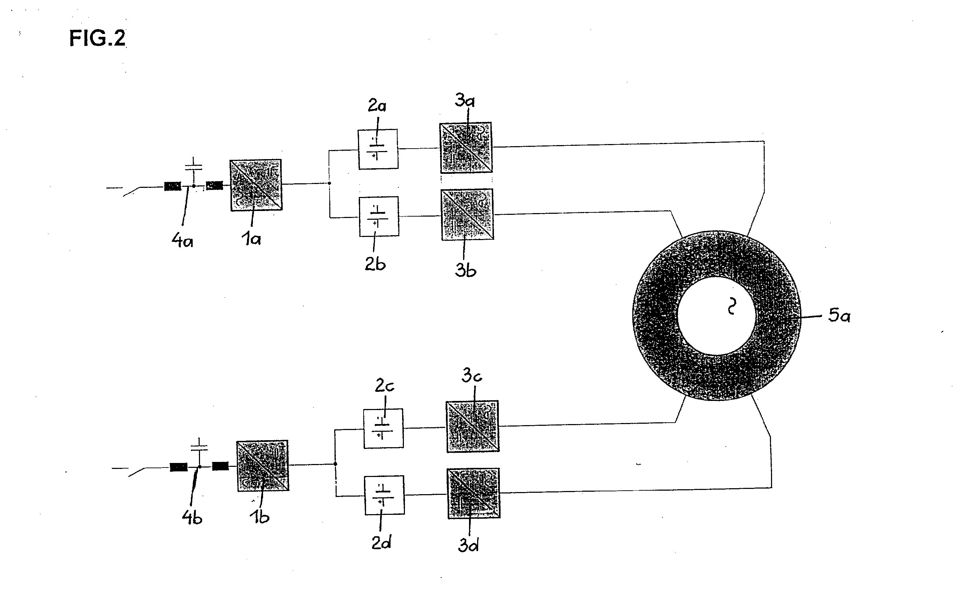

In Fig.2 ist eine Schaltungsanordnung für einen Antriebsmotor 5a, welcher mit vier Gruppen von Elektromagneten ausgebildet ist, dargestellt. Diese Anordnung besteht aus zwei Gleichrichterschaltungen 1a und 1b, welche über Netzfilter 4a und 4b an das Speisenetz angeschlossen sind. An die Gleichrichterschaltungen 1a und 1b sind jeweils zwei Speicherschaltungen 2a, 2b, 2c und 2d und zwei Umrichterschaltungen 3a, 3b, 3c und 3d angeschlossen, durch welche vier Gruppen von am Stator des Elektromotors 5 angeordneten Elektromagneten gespeist werden.

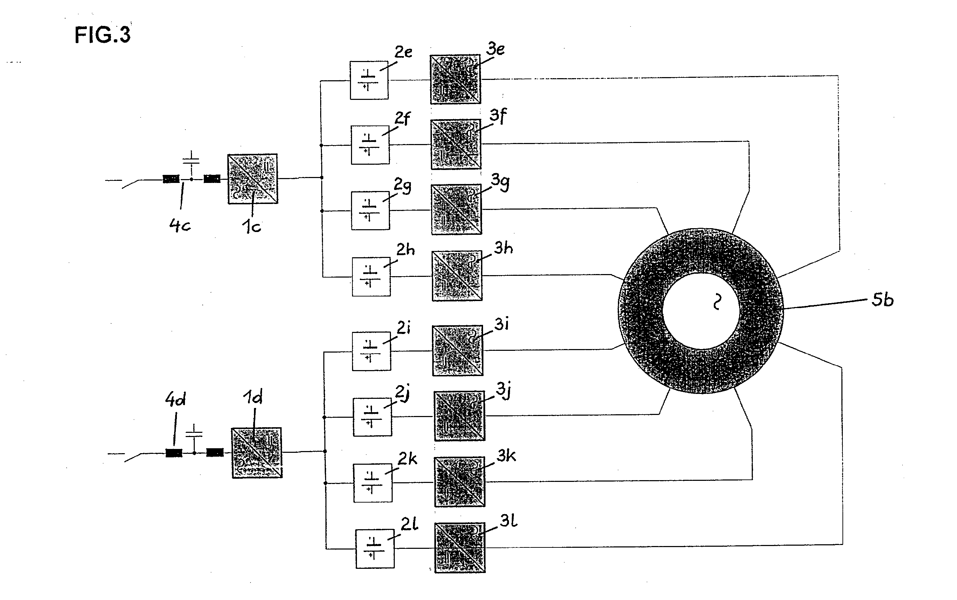

In Fig.3 ist eine Schaltungsanordnung für die Steuerung eines Elektromotors 5b, welcher mit acht Gruppen von Elektromagneten, die jeweils unabhängig voneinander über die Filterschaltungen 4c, 4d, die Gleichrichterschaltungen 1c, 1d, die Speicherschaltungen 2e bis 21 und die Umrichterschaltungen 3e bis 31 mit frequenzgesteuerten Wechselspannungen anspeisbar sind, dargestellt.

Durch die Ausbildung des Elektromotors mit voneinander gesondert angespeisten Gruppen von Elektromagneten wird die Funktion des Antriebsmotors auch bei Ausfall von einzelnen Antriebsgruppen gewährleistet.

## Patentansprüche

1. Schaltungsanordnung zur Speisung eines Elektromotors [5], welcher einen ortsfest angeordneten Stator und einen beweglichen, insbesondere verdrehbar gelagerten Rotor aufweist, wobei der Stator mit einer Vielzahl von insbesondere ringförmig angeordneten Elektromagneten und der Rotor mit einer Vielzahl von den Elektromangneten des Stators zugeordneten, insbesondere ringförmig angeordneten Permanentmagneten ausgebildet ist, mit einer Gleichrichterschaltung (1) zur Umwandlung der vom Speisenetz bezogenen Wechselspannung in eine Gleichspannung sowie mit einer Umrichterschaltung (3), durch welche die Gleichspannung in eine in ihrer Frequenz steuerbare Wechselspannung, welche zur Speisung des Elektromotors (5) dient, umwandelbar ist, **dadurch gekennzeichnet, daß** zwischen der Gleichrichterschaltung (1) und der Umrichterschaltung (3) eine mindestens einen Akkumulator (21) enthaltende Speicherschaltung (2) vorgesehen ist.

2. Schaltungsanordnung nach Anspruch 1, **dadurch gekennzeichnet, daß** in der Speicherschaltung (2) mindestens eine Gruppe von in Serie geschalteten Akkumulatoren [21] vorgesehen ist.

3. Schaltungsanordnung nach einem der Ansprüche 1 und 2, **dadurch gekennzeichnet, daß** in der Speicherschaltung (2) in an sich bekannter Weise mindestens ein Kondensator (22) vorgesehen ist, welcher dem mindestens einen Akkumulator (21) parallel geschaltet ist.

4. Schaltungsanordnung nach einem der Ansprüche 1 bis 3, **dadurch gekennzeichnet, daß** der Stator des Elektromotors (5a) mit mehreren Gruppen von Elektromagneten ausgebildet ist, welchen jeweils eigene Speicherschaltungen (2a, 2b, 2c, 2d) und Umrichterschaltungen (3a, 3b, 3c, 3d) zugeordnet sind (Fig.2).
